# EUROPÄISCHE PATENTSCHRIFT

(11) **EP 3 158 049 B1**
(45) Veröffentlichungstag und Bekanntmachung des Hinweises auf die Patenterteilung: **01.05.2024**
(21) Anmeldenummer: 15729175.8
(22) Anmeldetag: 16.06.2015
(51) Int. Cl.: C11D 11/00, C11D 1/83, C11D 1/66, C11D 1/02, C11D 3/43

(54) **REINIGUNGSMITTEL ZUR SCHONENDEN ENTFERNUNG VON TINTEN UND MARKER**
DETERGENT FOR GENTLE REMOVAL OF INKS AND MARKERS
AGENT DE NETTOYAGE POUR UNE ÉLIMINATION DOUCE D'ENCRES ET DE MARQUEURS

(30) Priorität: 17.06.2014 DE 102014211584
(43) Veröffentlichungstag der Anmeldung: 26.04.2017
(73) Patentinhaber: Chemetall GmbH, 60487 Frankfurt am Main (DE)
(72) Erfinder: BONS, Peter, 61203 Reichelsheim (DE); REIN, Rüdiger, 61118 Bad Vilbel (DE); WÖRNER, Jörg, 63486 Bruchköbel (DE); CORNELI, Miriam, 65795 Hattersheim (DE)
(74) Vertreter: BASF IP Association
(86) Internationale Anmeldenummer: PCT/EP2015/063418
(87) Internationale Veröffentlichungsnummer: WO 2015/193280

(56) Entgegenhaltungen:
- EP-A1- 1 927 651
- WO-A1-2012/084150
- WO-A1-2015/112742
- DE-A1-102004 057 623
- US-A- 5 944 908
- US-A1- 2001 009 893
- US-B1- 6 281 182

## Beschreibung

Die Erfindung betrifft ein Reinigungsmittel zur schonenden Entfernung von Tinten, wie sie im Walzwerk zur Kennzeichnung eingesetzt werden, sowie Markern, wie sie in der Produktion zur temporären Kennzeichnung eingesetzt werden.

Häufig werden die Tinten und Marker durch manuelle Reinigung mit schnellverdunstenden Lösemitteln vor der eigentlichen automatisierten wässrigen Reinigung von der Oberfläche entfernt. Der Nachteil dieses Prozessschrittes ist ein erhöhtes Risiko durch die Freisetzung von leichtentzündlichen Stoffen und die Gefahr der Schädigung von Personen bei der Anwendung. Durch den Einsatz von diesen Lösemitteln tritt zudem eine Belastung der Umwelt durch sogenannte "VOC" (**VOC** bzw. **VOCs** nach **v**olatile **o**rganic **c**ompound[s]) auf. Weiterhin tritt bei den konventionell gebräuchlichen Reinigungsmitteln ein signifikanter Abtrag von metallischen Substrat bei der Entfernung von Tinten und Markern auf.

Die DE 10 2004 057 623 A1 beschreibt ein wässriges Reinigungsmittelkonzentrat, welches Wasser, Glykolether, Polyethylenimin und Kationtenside enthält.

Die WO 2015/112742 A1 beschreibt ein Reinigungsmittel, welches ein nicht wasser-mischbares Lösemittel, ein nichtionisches Tensid, einen Komplexbildner, Puffer und ein wassermischbares Lösemittel enthält.

Eine Aufgabe der Erfindung ist es, ein Reinigungsmittel vorzuschlagen, welches die schonende Entfernung von Tinten und Marker von metallischen Oberflächen gestattet. Unter "schonender Entfernung" wird im Sinne der vorliegenden Erfindung eine "abtragsfreie" Behandlung des Substrats mit metallischer Oberfläche verstanden, bei der ein Abtrag vom metallischen Substrat von weniger als 0,1 µm/h beträgt.

Weiterhin soll das Reinigungsmittel bei Verwendung als Reinigungsbad die Funktion der separaten / manuellen Vorreinigung übernehmen.

Das erfindungsgemäße Reinigungsmittel soll weiterhin zur Reinigung von metallischen Oberflächen, die gegebenenfalls mit unpolaren organischen Verschmutzungen wie z.B. Öl(en) oder/und anderen vorwiegend oder gänzlich organischen Verschmutzungen wie z.B. Fett(en), Seife(n) oder/und weiteren Metallbearbeitungshilfsmittel(n) wie z.B. Ziehhilfsmittel einschließlich anionischen organischen Verbindungen und Partikelschmutz verschmutzt sind, geeignet sein.

Erfindungsgemäß wird die Aufgabe durch ein Reinigungsmittels gelöst, welches die schonende Entfernung von Tinten und Marker von metallischen Oberflächen in Form eines Konzentrates oder einer Reinigungsbadlösung, gestattet, welches mindestens ein nicht wasser-mischbares Lösemittel in einer Menge von 4 bis 200 g/L, mindestens ein anionisches und/oder nichtionisches Tensid in einer Menge von 8 - 300 g/L, mindestens einen Komplexbildner in einer Menge von 1 - 100 g/L, mindestens eine Puffersubstanz in einer Menge von 1 -100 g/L und mindestens ein wassermischbares Lösemittel in einer Menge von 4 - 200 g/L in Wasser enthält, wobei das Reinigungsmittel mindestens ein nicht wasser-mischbares Lösemittel aus der Klasse der Ester enthält und/oder Milchsäureester der C₂-C₈-Alkohole enthält. Die wasserunlösliche Lösungsmittelkomponente integriert und stabilisiert den wässrigen Prozess. Die verwendete Lösemittelkomponente hat einen hohen Siedepunkt, so dass keine Verflüchtigung bei Anwendungstemperaturen stattfindet. Bei der Anwendung des Reinigungsmittels wurde eine Abtragsrate an metallischen Substrat von weniger als 0,1 µm/h gefunden. Vorzugsweise ist das Reinigungsmittel eines, welches mindestens ein nicht wasser-mischbares Lösemittel aus der Klasse der Ester- und/oder Ether-Verbindungen enthält. Diese sind ausgewählt aus der Gruppe bestehend aus Hydroxycarbonsäureestern und Glykolmonoethern.

Vorzugsweise ist das Reinigungsmittel weiterhin eines, welches mindestens ein Öl in Wasser emulgierendes Tensid aus nichtionischen Tensiden und/oder aus anionischen Tensiden enthält. Das Tensid weist vorzugsweise einen HLB-Wert im Bereich von 5 bis 16. Ganz besonders bevorzugt einen HLB-Werten von 6 bis 14, insbesondere solche mit HLB < 13 enthält. Unter HLB-Wert (hydrophilic-lipophilic balance) wird das Verhältnis des hydrophilen und lipophilen Anteils von hauptsächlich nichtionischen Tensiden nach W. C. Griffin verstanden.

Besonders bevorzugt ist ein Reinigungsmittel, welches mindestens eine Komponente zur pH - Wertstabilisierung enthält. Die erfindungsgemäßen Reinigungsmittel sind Borat- (Silikat)-frei, wobei darunter im Sinne der vorliegenden Erfindung ein Gehalt von < 100 ppm an Boraten (Silikaten) verstanden wird.

Vorzugsweise enthält das Reinigungsmittel einen Korrosionsinhibitor und/oder mindestens ein weiteres Additiv ausgewählt aus der Gruppe bestehend aus Bioziden, Entschäumern und/oder Beizinhibitoren.

Der Gesamtgehalt aller Wirkstoffe im das Reinigungsmittel enthaltenden Reinigungsbad liegt vorzugsweise im Bereich von 10 bis 200 g/L. Vorzugsweise wird das Reinigungsmittel als Reinigungsbad mit Wasser in einem Verhältnis von 1: 1 bis 1: 20 verdünnt.

Das Reinigungsmittel kann in Reinigungsbädern eingesetzt werden, die mit Ölen, weiteren unpolaren organischen Verbindungen aus der Gruppe bestehend aus Fetten, Seifen, Partikelschmutz und/oder anionisch organischen Verbindungen verschmutzt sind.

Das Reinigungsmittel ist in Tauch-, Sprüh- und/oder Bürst-Reinigungsverfahren einsetzbar. Es wird vorzugsweise zur Reinigung von Substraten, die metallische Oberflächen aus Eisen, Stahl, Edelstahl, verzinktem Stahl, metallisch beschichtetem Stahl, Aluminium, Magnesium, Titan und/oder deren Legierungen eingesetzt. Besonders bevorzugt wird es zur Reinigung von Substraten in Form von Blechen, Bauteilen und/oder Verbundbauteilen aus verschiedenen Substraten eingesetzt.

Das Reinigungsmittels findet erfindungsgemäß Verwendung zur Erzeugung von gereinigten Substraten vor dem Phosphatieren und/oder vor einer Anodisierung, vor dem Beschichten mit einer Behandlungs- oder Vorbehandlungszusammensetzung auf Basis von Silan/Siloxan/Polysiloxan, Titan-/Zirkonium-Verbindung, Eisenoxid/Kobaltoxid, Chromat, Oxalat, Phosphonat/Phosphat und/oder einem organischen Polymer/Copolymer und/oder vor dem Beschichten mit mindestens einer Zusammensetzung auf Basis von einer im wesentlichen organischen polymeren Zusammensetzung, mit einem Schweißprimer, mit einer galvanischen Beschichtung, mit einer Emaille-Beschichtung, mit einer CVD-Beschichtung, mit einer PVD-Beschichtung und/oder mit einer temporären Korrosionsschutzbeschichtung. Dieses kann insbesondere sein a) vor der Anodisierung und/oder vor der chemischen Oberflächenbehandlung, b) vor der sogenannten Vorbehandlung von metallischen Oberflächen von Substraten z.B. vor dem Lackieren z.B. mit einer Vorbehandlungszusammensetzung (Konversionsbehandlung) wie z.B. durch Cr(III), c) vor der Nutzung einer industriellen Waschanlage oder/und d) als Zwischenreinigung z.B. vor einer Teilmontage eingesetzt.

Im Folgenden wird zwischen Bad, Badlösung und Reinigungsbad nicht unterschieden und daher meistens vom "Bad" gesprochen. Hierbei umfasst der Begriff beispielsweise auch eine Lösung, die z.B. durch Sprühen aufgebracht wird.

Das zur Reinigung eingesetzte wässerige, Lösemittel/Tensid-haltige Bad hat vorzugsweise einen pH-Wert im Bereich von pH 4 bis 10, insbesondere im Bereich von pH 5 bis 9, ganz besonders im Bereich von pH 6 bis 8.

Die in der Praxis eingesetzten Tinten und Marker sind heute sehr kompliziert zusammengesetzte Gemische, die eine Vielzahl unterschiedlicher Substanzen neben den Bestandteilen des Trägermediums, wie z.B. Lösemittel, wässrige Gemische aufweisen.

Als Öle, die gegebenenfalls zu der Verschmutzung des Bades beitragen, kommen oft naphthenische oder/und aliphatische Öle in Frage. Diese Öle nennt man am ehesten Bearbeitungsöle. Sie werden unter Umständen auch als Abschrecköle, Härteöle, Hohnöle, Korrosionsschutzöle, Kühlschmiermittelemulsionen, Kühlschmiermittelöle, Schneidöle und/oder Umformöle bezeichnet.

Es wurde überraschenderweise festgestellt, dass durch den Zusatz von einem Lösemittel/Tensid Gemisches, die Reinigungsleistung gegenüber Tinten und/oder Markern aufrechterhalten werden kann.

Die Gehalte an nicht flüchtigen Lösemittel im Reinigungsbad liegen vorzugsweise im Bereich von 1 bis 50 g/L, besonders bevorzugt im Bereich von 2 bis 40 g/L, ganz besonders bevorzugt im Bereich von 3 bis 30 g/L.

Bei dem erfindungsgemäßen Verfahren ist/wird mindestens ein Lösemittel vorzugsweise ausgewählt aus der Gruppe der wasserunlöslichen Lösemittel, insbesondere mindestens eines auf Basis von Ester und/oder Ether-Verbindungen.

Weiterhin enthält es ein Tensid aus der Gruppe von nichtionischen oder anionischen Tenside.

In vielen Ausführungsvarianten ist es vorteilhaft, wenn das Reinigungsbad zusätzlich mindestens ein Reinigergerüst, das heißt mindestens einen Gerüststoff, enthält oder/und dieser dem Bad zugesetzt wird. Das Reinigergerüst kann helfen, um eine Veränderung des pH-Wertes zu verhindern. Das Reinigergerüst ist vorzugsweise mindestens einen Gerüststoff auf Basis von organischen Puffersubstanzen z.B. Glycin, mindestens ein alkalisches Medium z.B. auf Basis von Alkanolamin wie z.B. auf Basis von Monoalkylamin(en), Trialkylamin(en), Monoalkanolamin(en) oder/und Trialkanolamin(en) wie z.B. Monoethanolamin, Triethanolamin, Methyldiethanolamin oder/und mindestens einen Komplexbildner wie z.B. auf Basis von Carboxylat(en) wie z.B. Gluconat oder/und Heptonat, Natriumsalz der Nitrilotriessigsäure (NTA) oder/und von Phosphonat(en) wie z.B. 1-Hydroxyethan-(1,1-diphosphonsäure) (HEDP) enthalten. Der Gehalt an Gerüststoffen liegt insbesondere im Bereich von 0,1 bis 290 g/L, vorzugsweise von 0,2 bis 120 g/L, besonders bevorzugt im Bereich von 0,5 oder von 1 bis 100 g/L und ganz besonders bevorzugt im Bereich von 1,5 bis 48 g/L. Es werden hierbei Gehalte an Gerüststoffen bei Spritzverfahren im Bereich von 1 bis 50 g/L eingesetzt, bei Tauchverfahren im Bereich von 2 bis 100 g/L, üblicherweise unabhängig davon, ob es sich um kontinuierliche oder diskontinuierliche Verfahren handelt.

Darüber hinaus kann auch mindestens ein Additiv wie z.B. mindestens ein Biozid oder/und mindestens ein Entschäumer im Bad enthalten sein und/oder dem Bad zugesetzt werden, insbesondere jeweils im Bereich von 0,01 bis 0,5 g/L. Ferner kann das Bad auch mindestens einen Beizinhibitor enthalten und/oder diesem zugesetzt werden. Beizinhibitoren helfen, den Angriff des Reinigungsbades insbesondere bei Oberflächen von Aluminium, Magnesium, Zink oder/und deren Legierungen zu verringern oder zu verhindern. Sie wirken oft recht selektiv je nach Art der zu schützenden metallischen Oberflächen, so dass diese teilweise in bestimmten Gemischen eingesetzt werden. Der Badgehalt der Beizinhibitoren liegt dabei vorzugsweise im Bereich von 0,01 bis 10 g/L, besonders bevorzugt im Bereich von 0,1 bis 8 g/L. Als Beizinhibitor(en) können unter anderem Phosphonat(e) und Phosphorsäureester verwendet werden.

Der Gesamtgehalt aller Wirkstoffe im Bad liegt im Bereich von 1 bis 300 g/L, vorzugsweise im Bereich von 2 bis 250 g/L, besonders bevorzugt im Bereich von 3 bis 200 g/L. Er kann insbesondere für die Reinigung von Baugruppen, Blechen und/oder Bauteilen vor der Anodisierung bei Spritzverfahren insbesondere im Bereich von 3 bis 150 g/L, bei Tauchverfahren insbesondere im Bereich von 3 bis 200 g/L liegen.

Je nach Anlagen kann es genügen, eine Reinigungszone (Bad) oder nur einen Teil der verschiedenen Reinigungszonen (Reinigungsbäder) einzusetzen, insbesondere dann, wenn auf diese Weise die anderen Reinigungszonen nicht stärker mit Verschmutzungen belastet werden.

Die Badlösung kann hierbei auch in mindestens einer Reinigungszone beispielsweise durch Sprühen und/oder durch Sprühen und Bürsten aufgebracht werden. Im Tauchen kann das mindestens eine Substrat auch gegebenenfalls elektrolytisch behandelt werden, also durch elektrolytisches Reinigen.

Der angewandte Druck liegt bei den Reinigungsverfahren vielfach im Wesentlichen bei Atmosphärendruck, wenn von Drucken bei Umwälzverfahren z.B. durch Injektionsflutverfahren (u.U. bis etwa 50 bar) abgesehen wird, während bei Spritzverfahren oft mit Spritzdrucken im Bereich von 0.1 bis 5 bar gearbeitet wird. Die Temperaturen liegen bei den Reinigungsverfahren - teilweise von der chemischen Zusammensetzung abhängig - vorzugsweise im Bereich von 5 bis 90 °C, besonders bevorzugt im Bereich von 10 bis 80 °C, wobei Spritzverfahren oft im Bereich von 30 bis 70 °C und Tauchverfahren oft im Bereich von 30 bis 90 °C angewandt werden.

Die nichtionischen Tenside weisen typischerweise einen HLB-Wert (hydrophilic-lipophilic balance) im Bereich von 5 bis 16, oft im Bereich von 6 bis 15 auf. Tenside wirken vorzugsweise bei HLB-Werten < 14, insbesondere bei solchen < 13 stabilisierend auf das wasserunlösliche Lösemittel.

Bei dem erfindungsgemäßen Verfahren werden vorzugsweise Substrate in Form von Blechen, Teilen oder/und Verbundbauteilen gereinigt. Generell weisen die Substrate, die erfindungsgemäß gereinigt werden, vorzugsweise metallische Oberflächen aus Eisen, Stahl, Edelstahl, verzinktem Stahl, metallisch beschichtetem Stahl, Aluminium, Magnesium, Titan oder/und deren Legierungen auf.

Überraschenderweise wurden bei der Verwendung des erfindungsgemäßen Reinigungsmittels in einem Reinigungsverfahren gefunden, dass damit sogar eine abtragsfreie, mindestens 40%ige Entfernung von Tinten und Markern von dem metallischen Substrat ohne Probleme und auf einfache Weise sichergestellt werden konnte. Unter "abtragsfrei" wird im Sinne dieser Erfindung ein Abtrag vom metallischen Substrat von weniger als 0,1 µm/h verstanden.

Die Reinigung kann hierbei insbesondere als Vorstufe entweder vor der Vorbehandlung von metallischen Oberflächen von Substraten vor der Anodisierung, vor der Behandlung oder Passivierung von metallischen Oberflächen wie z.B. Teilen und Baugruppen oder vor der Reinigung in einer industriellen Waschanlage oder als Zwischenreinigungsstufe vor einer Teilmontage dienen.

Die nach dem erfindungsgemäßen Verfahren gereinigten Substrate können zum Anodisieren, insbesondere zum Anodisieren ohne Chrom IV, Alkaliphosphatieren wie z.B. zum Eisenphosphatieren, zum Manganphosphatieren oder zum Zinkphosphatieren oder/und für das Beschichten mit mindestens einer Behandlungs- oder Vorbehandlungszusammensetzung auf Basis von Silan/Siloxan/Polysiloxan, Titan-/Zirkonium-Verbindung, Eisenoxid/Kobaltoxid, Oxalat, Phosphonat/Phosphat oder/und organischem Polymer/Copolymer oder/und für das Beschichten mit mindestens einer Zusammensetzung auf Basis von einer im wesentlichen organischen, polymeren Zusammensetzung, mit einem Schweißprimer, mit einer galvanischen Beschichtung, mit einer Emaille-Beschichtung, mit einer CVD-Beschichtung, mit einer PVD-Beschichtung oder/und mit einer temporären Korrosionsschutzbeschichtung verwendet werden.

Nachfolgenden sind Beispiele aufgeführt, welche die Herstellung und Zusammensetzung wässriger Konzentrate und daraus hergestellter Bäder sowie die Applikationsbedingungen beschreiben, um die Erfindung besser zu verdeutlichen, ohne dass dadurch die Erfindung auf die konkreten Beispiele reduziert wird.

### Beispiel 1

In einem Becherglas mit magnetischer Rührung werden 70,8 Teile demineralisiertes Wasser vorgelegt und 0,9 Teile 75%ige o-Phosphorsäure zugegeben. Dann werden 4 Teile Dodecylbenzolsulfonsäure zugesetzt und durch moderates Rühren homogenisiert. Das Gemisch wird durch Zugabe von 1,9 Teilen 50 %iger Natronlauge neutralisiert. Unter ständigem Rühren werden in dieser Reihenfolge 0,3 Teile Pentanatriumtripolyphosphat, 0,1 Teile Monoethanolamin, 5 Teile Ethomeen^{®} C/15 (Hersteller Akzo Nobel, Kokosalkylaminethoxylat) und 3 Teile Softanol^{®} 70 (Hersteller Ineos Oxide, Fettalkoholethoxylat) zugesetzt. Am Ende werden der Lösung 1 Teil Dissolvine^{®} GL 38 (Hersteller Akzo Nobel, Glutaminsäurediacetat), 8 Teile Dipropylenglykolmonomethylether und 5 Teile 2-Phenoxyethanol zugemischt. Nach kurzem Nachrühren wird ein klares Reinigerkonzentrat erhalten.

Das erhaltene Reinigerkonzentrat wird für die Anwendung im Tauchverfahren in einem Verhältnis von 1 : 4 mit Wasser verdünnt und zwecks Beschleunigung des Reinigungsvorgangs auf 55 °C aufgewärmt. Ein mit Tintenaufdrucken (Typ Rea-Jet^{®} TKO-SW 010) und Permanentmarker-Beschriftungen (Typ Edding^{®} 3000) versehenes Metallblech wird zur Entfernung derselben 15 Minuten bei schwacher Rührung des Reinigerbades vollständig eingetaucht. Nach Ablauf der Zeit wird das Blech mehrmals in Wasser getaucht, um anhaftende Reinigerlösung zu entfernen.

Die Tintenaufdrucke lösen sich während des beschriebenen Reinigungsprozesses vollständig (100 %), die Permanentmarker-Beschriftungen nahezu vollständig (70 %) ab.

Tabelle 1 führt weitere Beispiele B2 bis B9 sowie Vergleichsbeispiele VB1 und VB2 an Reinigerformulierungen auf, welche den Erfindungsgegenstand erläutern sollen. Die Herstellung der Reinigerkonzentrate erfolgte analog zu Beispiel 1. Beispiele B2-B6 sind nicht erfindungsgemäß.

Tabelle 2 stellt die Reinigungsleistung, welche anhand eines visuellen Vergleichs eingestuft wurde, dar. Die Bewertung der Reinigungsleistung wurde anhand der Entfernung von Tintenaufdrucken und Permanentmarkerbeschriftungen vorgenommen. Dafür wurden in gleicher Weise vorbereitete Testbleche mit Tinte und Permanentmarker bedruckt bzw. beschriftet. Das aufgebrachte Muster an Bedruckungen bzw. Beschriftungen erlaubte eine Quantifizierung der Reinigungsleistung.

**Tabelle 1**

| **Beispiel/Vergleichsbeispiel** | **B2** | **B3** | **B4** | **B5** | **B6** | **B7** | **B8** | **B9** | **VB1** | **VB2** |
|---|---|---|---|---|---|---|---|---|---|---|
| Zusammensetzung in Gew.% | | | | | | | | | | |
| Demineralisiertes Wasser | 62,0 | 56,2 | 71,4 | 71,7 | 56,7 | 56,7 | 56,7 | 56,7 | 77,0 | 74,3 |
| o-Phosphorsäure, 75 % | 0,8 | | | 0,9 | | | | | | 0,8 |
| Dodecylbenzolsulfonsäure | | | | 2,0 | | | | | | |
| Citronensäure | 1,0 | | | | | | | | | |
| Caprylsäure | 3,0 | 5,0 | 10,6 | 2,0 | 7,0 | 7,0 | 7,0 | 7,0 | | 2,0 |
| Dipropylenglykol | | 15,0 | | | | | | | | |
| Kalilauge, 50 % | 5,4 | | | | | | | | 3,0 | |
| Natronlauge, 50 % | | | | 0,7 | | | | | | 2,5 |
| Kaliumsilikatlösung, 30% | | | | | | | | | 10,0 | 1,0 |
| Monoethanolamin | | 1,8 | 5,0 | 0,5 | 2,7 | 2,7 | 2,7 | 2,7 | | |
| Pentanatrium-tripolyphosphat | 0,8 | 1 | | 0,2 | | | | | | 0,8 |
| Glutaminsäurediacetat, 40 % | | | 1,0 | 1,0 | 1,0 | 1,0 | 1,0 | 1,0 | 1,5 | 1,0 |
| Octylphosphonsäure | 0,2 | | | | | | | | | 0,2 |
| C₁₂-C₁₅ Fettalkoholethoxylat | 3,0 | 3,0 | 3,0 | 3,0 | 5,0 | 5,0 | 5,0 | 5,0 | 3,0 | 2,0 |
| Kokosalkyldiethanolamid | 5,0 | 5,0 | | | | | | | | 9,0 |
| C₉-C₁₁ Fettalkoholethoxylat | 8,0 | | | | | | | | | |
| Kokosalkylaminethoxylat | | | | | | | | | 2,5 | |
| Glycin | 4,0 | 5,0 | 3,0 | | 5,0 | 5,0 | 5,0 | 5,0 | | |
| Dipropylenglykolmonomethylether | 6,0 | 8,0 | 2,0 | 8,0 | 6,3 | 6,3 | | | 3,0 | 3,0 |
| Propylenglykolmonobutylether | 3,0 | | 2,0 | | | | | | | 3,0 |
| 2-Phenoxyethanol | 3,0 | | 2,0 | 5,0 | | | | | | |
| Ethylenglykolmonohexylether | | | | | 6,3 | | | | | |
| Natriumdioctylsulfosuccinat | | | | | 5,0 | 5,0 | | | | |
| 2-Ethylhexyllactat | | | | | | 6,3 | 6,3 | 6,3 | | |
| Ethyllactat | | | | | | | 6,0 | | | |
| n-Butyllactat | | | | | | | 0,3 | 6,3 | | |
| Neopentylglykol | | | | | 5,0 | 5,0 | 5,0 | 5,0 | | |
| **Summe:** | 100,0 | 100,0 | 100,0 | 100,0 | 100,0 | 100,0 | 100,0 | 100,0 | 100,0 | 100,0 |

**Tabelle 2**

| **Beispiel/Vergleichsbeispiel** | **B2** | **B3** | **B4** | **B5** | **B6** | **B7** | **B8** | **B9** | **VB1** | **VB2** |
|---|---|---|---|---|---|---|---|---|---|---|
| Reinigungsleistung in % | | | | | | | | | | |
| Reinigung von Tinte Rea-Jet^{®} TKO-SW 010 | 80 | 60 | 80 | 100 | 90 | 100 | 100 | 90 | 30 | 20 |
| Reinigung von Edding^{®} 3000 | 60 | 40 | 70 | 70 | 70 | 100 | 100 | 60 | 0 | 10 |

## Patentansprüche

1. Reinigungsmittel zur schonenden Entfernung von Tinten und Marker von metallischen Oberflächen in Form eines Konzentrates oder einer Reinigungsbadlösung, **dadurch gekennzeichnet, dass** es mindestens ein nicht wasser-mischbares Lösemittel in einer Menge von 4 bis 200 g/L, mindestens ein anionisches und/oder nichtionisches Tensid in einer Menge von 8 - 300 g/L, mindestens einen Komplexbildner in einer Menge von 1 - 100 g/L, mindestens eine Puffersubstanz in einer Menge von 1 -100 g/L und mindestens ein wassermischbares Lösemittel in einer Menge von 4 - 200 g/L in Wasser enthält, wobei das Reinigungsmittel mindestens ein nicht wasser-mischbares Lösemittel aus der Klasse der Ester enthält und/oder Milchsäureester der C₂-C₈-Alkohole enthält und wobei das Reinigungsmittel einen Gehalt von < 100 ppm an Boraten aufweist.

2. Reinigungsmittel nach Anspruch 1, **dadurch gekennzeichnet, dass** es mindestens ein nicht wasser-mischbares Lösemittel aus der Klasse der Ether-Verbindungen enthält.

3. Reinigungsmittel nach Anspruch 1 oder 2, **dadurch gekennzeichnet, dass** es mindestens ein nicht wasser-mischbares Lösemittel ausgewählt aus der Gruppe bestehend aus Hydroxycarbonsäureestern und Glykolmonoethern enthält.

4. Reinigungsmittel nach Anspruch 1 bis 3, **dadurch gekennzeichnet, dass** es mindestens ein Öl in Wasser emulgierendes Tensid aus nichtionischen Tensiden und/oder aus anionischen Tensiden enthält.

5. Reinigungsmittel nach Anspruch 1 bis 4, **dadurch gekennzeichnet, dass** es mindestens ein Tensid mit einen HLB-Wert im Bereich von 5 bis 16 enthält.

6. Reinigungsmittel nach Anspruch 1 bis 5, **dadurch gekennzeichnet, dass** es mindestens ein Tensid mit HLB-Werten von 6 bis 14, insbesondere solche mit HLB < 13 enthält.

7. Reinigungsmittel nach Anspruch 1 bis 6, **dadurch gekennzeichnet, dass** es mindestens eine Komponente zur pH - Wertstabilisierung enthält.

8. Reinigungsmittel nach Anspruch 1 bis 7, **dadurch gekennzeichnet, dass** es einen Korrosionsinhibitor und/oder mindestens ein weiteres Additiv ausgewählt aus der Gruppe bestehend aus Bioziden, Entschäumern und/oder Beizinhibitoren enthält.

9. Reinigungsmittel nach Anspruch 1 bis 8, **dadurch gekennzeichnet, dass** der Gesamtgehalt aller Wirkstoffe im Reinigungsbad im Bereich von 10 bis 200 g/L liegt.

10. Reinigungsmittel nach Anspruch 1 bis 9, **dadurch gekennzeichnet, dass** es als Reinigungsbad mit Wasser in einem Verhältnis von 1: 1 bis 1: 20 verdünnt ist.

11. Reinigungsmittel nach Anspruch 1 bis 10, **dadurch gekennzeichnet, dass** das Reinigungsbad mit Ölen, weiteren unpolaren organischen Verbindungen aus der Gruppe bestehend aus Fetten, Seifen, Partikelschmutz und/oder anionisch organischen Verbindungen verschmutzt sein kann.

12. Reinigungsmittel nach Anspruch 1 bis 10 einsetzbar in Tauch-, Sprüh- und / oder Bürst-Reinigungsverfahren.

13. Reinigungsmittel nach Anspruch 1 bis 10 zur Reinigung von Substraten, die metallische Oberflächen aus Eisen, Stahl, Edelstahl, verzinktem Stahl, metallisch beschichtetem Stahl, Aluminium, Magnesium, Titan und/oder deren Legierungen aufweisen.

14. Reinigungsmittel nach Anspruch 1 bis 10 zur Reinigung von Substraten in Form von Blechen, Bauteilen und/oder Verbundbauteilen aus verschiedenen Substraten.

15. Verwendung eines Reinigungsmittels zur Erzeugung von gereinigten Substraten vor dem Phosphatieren und/oder vor einer Anodisierung, vor dem Beschichten mit einer Behandlungs- oder Vorbehandlungszusammensetzung auf Basis von Silan/Siloxan/Polysiloxan, Titan-/Zirkonium-Verbindung, Eisenoxid/Kobaltoxid, Chromat, Oxalat, Phosphonat/Phosphat und/oder einem organischen Polymer/Copolymer und/oder vor dem Beschichten mit mindestens einer Zusammensetzung auf Basis von einer im wesentlichen organischen polymeren Zusammensetzung, mit einem Schweißprimer, mit einer galvanischen Beschichtung, mit einer Emaille-Beschichtung, mit einer CVD-Beschichtung, mit einer PVD-Beschichtung und/oder mit einer temporären Korrosionsschutzbeschichtung, wobei das Reinigungsmittel in Form eines Konzentrats oder einer Reinigungsbadlösung mindestens ein nicht wasser-mischbares Lösemittel in einer Menge von 4 bis 200 g/L, mindestens ein anionisches und/oder nichtionisches Tensid in einer Menge von 8 - 300 g/L, mindestens einen Komplexbildner in einer Menge von 1 - 100 g/L, mindestens eine Puffersubstanz in einer Menge von 1 -100 g/L und mindestens ein wasser-mischbares Lösemittel in einer Menge von 4 - 200 g/L in Wasser enthält, wobei das Reinigungsmittel mindestens ein nicht wasser-mischbares Lösemittel aus der Klasse der Ester enthält und/oder Milchsäureester der C2-C8-Alkohole enthält und wobei das Reinigungsmittel einen Gehalt von < 100 ppm an Boraten aufweist.

## Claims

1. A cleaning composition for gently removing inks and marker from metallic surfaces, in the form of a concentrate or a cleaning bath solution, wherein it comprises at least one non-water-miscible solvent in an amount of 4 to 200 g/L, at least one anionic and/or nonionic surfactant in an amount of 8 - 300 g/L, at least one complexing agent in an amount of 1 - 100 g/L, at least one buffer substance in an amount of 1 - 100 g/L and at least one water-miscible solvent in an amount of 4 - 200 g/L in water, the cleaning composition comprising at least one non-water-miscible solvent from the class of the esters and/or comprising lactic esters of C₂-C₈ alcohols, and the cleaning composition having a borate content of < 100 ppm.

2. The cleaning composition according to claim 1, wherein it comprises at least one non-water-miscible solvent from the class of the ether compounds.

3. The cleaning composition according to claim 1 or 2, wherein it comprises at least one non-water-miscible solvent selected from the group consisting of hydroxycarboxylic esters and glycol monoethers.

4. The cleaning composition according to claim 1 to 3, wherein it comprises at least one oil-in-water emulsifying surfactant from nonionic surfactants and/or from anionic surfactants.

5. The cleaning composition according to claim 1 to 4, wherein it comprises at least one surfactant having an HLB in the range from 5 to 16.

6. The cleaning composition according to claim 1 to 5, wherein it comprises at least one surfactant having HLBs of 6 to 14, more particularly those with HLB < 13.

7. The cleaning composition according to claim 1 to 6, wherein it comprises at least one component for pH stabilization.

8. The cleaning composition according to claim 1 to 7, wherein it comprises a corrosion inhibitor and/or at least one further additive selected from the group consisting of biocides, defoamers and/or corrosive-ablation inhibitors.

9. The cleaning composition according to claim 1 to 8, wherein the total content of all active ingredients in the cleaning bath is in the range from 10 to 200 g/L.

10. The cleaning composition according to claim 1 to 9, wherein as a cleaning bath it is diluted with water in a ratio of 1:1 to 1:20.

11. The cleaning composition according to claim 1 to 10, wherein the cleaning bath may have soiling from oils, further apolar organic compounds from the group consisting of greases, soaps, particulate soiling and/or anionic-organic compounds.

12. The cleaning composition according to claim 1 to 10, which can be used in processes of cleaning by dipping, spraying and/or brushing.

13. The cleaning composition according to claim 1 to 10 for cleaning substrates having metallic surfaces of iron, steel, stainless steel, galvanized steel, metallically coated steel, aluminum, magnesium, titanium and/or alloys thereof.

14. The cleaning composition according to claim 1 to 10 for cleaning substrates in the form of sheets, components and/or composite components composed of different substrates.

15. The use of a cleaning composition for generating cleaned substrates prior to phosphatizing and/or prior to anodizing, prior to coating with a treatment or pretreatment composition based on silane/siloxane/polysiloxane, titanium/zirconium compound, iron oxide/cobalt oxide, chromate, oxalate, phosphonate/phosphate and/or an organic polymer/copolymer, and/or prior to coating with at least one composition based on a substantially organic polymeric composition, with a welding primer, with an electroplate coating, with an enamel coating, with a CVD coating, with a PVD coating and/or with a temporary anticorrosion coating, where the cleaning composition in the form of a concentrate or a cleaning bath solution comprises at least one non-water-miscible solvent in an amount of 4 to 200 g/L, at least one anionic and/or nonionic surfactant in an amount of 8 - 300 g/L, at least one complexing agent in an amount of 1 - 100 g/L, at least one buffer substance in an amount of 1 - 100 g/L and at least one water-miscible solvent in an amount of 4 - 200 g/L in water, the cleaning composition comprising at least one non-water-miscible solvent from the class of the esters and/or comprising lactic esters of C2-C8 alcohols, and the cleaning composition having a borate content of < 100 ppm.

## Revendications

1. Agent de nettoyage pour l'élimination douce d'encres et de marqueurs de surfaces métalliques sous forme d'un produit concentré ou d'une solution de bain de nettoyage, **caractérisé en ce qu'**il contient au moins un solvant non miscible à l'eau en une quantité de 4 à 200 g/l, au moins un tensioactif anionique et/ou non ionique en une quantité de 8 - 300 g/l, au moins un complexant en une quantité de 1 - 100 g/l, au moins une substance tampon en une quantité de 1 - 100 g/l et au moins un solvant miscible à l'eau en une quantité de 4 - 200 g/l dans de l'eau, l'agent de nettoyage contenant au moins un solvant non miscible à l'eau de la classe des esters et/ou contenant des esters de l'acide lactique d'alcools en C₂-C₈ et l'agent de nettoyage présentant une teneur en borates < 100 ppm.

2. Agent de nettoyage selon la revendication 1, **caractérisé en ce qu'**il contient au moins un solvant non miscible à l'eau de la classe des composés de type éther.

3. Agent de nettoyage selon la revendication 1 ou 2, **caractérisé en ce qu'**il au moins un solvant non miscible à l'eau choisi dans le groupe constitué par les esters d'acides hydroxycarboxyliques et les glycolmonoéthers.

4. Agent de nettoyage selon la revendication 1 à 3, **caractérisé en ce qu'**il contient au moins un tensioactif émulsifiant l'huile dans l'eau parmi des tensioactifs non ioniques et/ou des tensioactifs anioniques.

5. Agent de nettoyage selon la revendication 1 à 4, **caractérisé en ce qu'**il contient au moins un tensioactif présentant une valeur de BHL dans la plage de 5 à 16.

6. Agent de nettoyage selon la revendication 1 à 5, **caractérisé en ce qu'**il contient au moins un tensioactif présentant des valeurs de BHL de 6 à 14, en particulier des tensioactifs présentant une valeur de BHL < 13.

7. Agent de nettoyage selon la revendication 1 à 6, **caractérisé en ce qu'**il contient au moins un composant pour la stabilisation de la valeur du pH.

8. Agent de nettoyage selon la revendication 1 à 7, **caractérisé en ce qu'**il contient un inhibiteur de corrosion et/ou au moins un autre additif choisi dans le groupe constitué par les biocides, les antimousses et/ou les inhibiteurs de décapage.

9. Agent de nettoyage selon la revendication 1 à 8, **caractérisé en ce que** la teneur totale de tous les agents actifs dans le bain de nettoyage se situe dans la plage de 10 à 200 g/L.

10. Agent de nettoyage selon la revendication 1 à 9, **caractérisé en ce qu'**il est dilué, en tant que bain de nettoyage, avec de l'eau dans un rapport de 1 : 1 à 1 : 20.

11. Agent de nettoyage selon la revendication 1 à 10, **caractérisé en ce que** le bain de nettoyage peut être contaminé par des huiles, d'autres composés organiques apolaires du groupe constitué par les graisses, les savons, les souillures particulaires et/ou les composés organiques anioniques.

12. Agent de nettoyage selon la revendication 1 à 10, utilisable dans des procédés de nettoyage par immersion, pulvérisation et/ou brossage.

13. Agent de nettoyage selon la revendication 1 à 10 destiné au nettoyage de substrats qui présentent des surfaces métalliques en fer, acier, acier inoxydable, acier zingué, acier revêtu de manière métallique, aluminium, magnésium, titane et/ou leurs alliages.

14. Agent de nettoyage selon la revendication 1 à 10 destiné au nettoyage de substrats sous forme de tôles, pièces et/ou pièces composites constituées par différents substrats.

15. Utilisation d'un agent de nettoyage pour obtenir des substrats nettoyés avant la phosphatation et/ou avant une anodisation, avant le revêtement par une composition de traitement ou de prétraitement à base de silane/siloxane/polysiloxane, d'un composé de titane/zirconium, d'oxyde de fer/oxyde de cobalt, de chromate, d'oxalate, de phosphonate/phosphate et/ou d'un polymère/copolymère organique et/ou avant le revêtement par au moins une composition à base d'une composition sensiblement polymère organique, par un apprêt de soudure, par un revêtement galvanique, par un revêtement d'émail, par un revêtement CVD (dépôt chimique en phase vapeur), par un revêtement PVD (dépôt physique en phase vapeur) et/ou par un revêtement temporaire de protection contre la corrosion, l'agent de nettoyage sous forme d'un produit concentré ou d'une solution de bain de nettoyage contenant au moins un solvant non miscible à l'eau en une quantité de 4 à 200 g/l, au moins un tensioactif anionique et/ou non ionique en une quantité de 8 - 300 g/l, au moins un complexant en une quantité de 1 - 100 g/l, au moins une substance tampon en une quantité de 1 - 100 g/l et au moins un solvant miscible à l'eau en une quantité de 4 - 200 g/l dans de l'eau, l'agent de nettoyage contenant au moins un solvant non miscible à l'eau de la classe des esters et/ou contenant des esters de l'acide lactique d'alcools en C2-C8 et l'agent de nettoyage présentant une teneur en borates < 100 ppm.
